# EUROPEAN PATENT APPLICATION

(11) **EP 4 137 772 A1**
(43) Date of publication of application: **22.02.2023**
(21) Application number: 21194241.2
(22) Date of filing: 01.09.2021
(51) Int. Cl.: F27B 7/38, C04B 7/47, F27D 17/00

(54) **ENERGY RECOVERY SYSTEM FOR A GRATE COOLER**

(30) Priority: 20.08.2021 PT 2021117412
(71) Applicant: Secil-Companhia Geral de Cal e Cimento S.A., 1070-100 Lisboa (PT)
(72) Inventor: PIRES DOS SANTOS MATEUS, MARIA MARGARIDA, 2720-428 Damaia (PT); VERÍSSIMO MEYER, JOÃO, 1050-050 Lisboa (PT)
(74) Representative: do Nascimento Gomes, Rui

(57) **Abstract**

An energy recovery system (1) for a grate cooler (5) is presented, being comprised by an organic cycle waste heat recovery subsystem (2), adapted to collect Excess-Air (α) from a grate cooler, and to generate energy from the heat contained in said Excess-Air; an Excess-Air recirculation subsystem (4), configured to introduce Excess-Air (θ) into the grate cooler (5); and a control subsystem, configured to control the temperature inside the grate cooler (5) by acting on the energy to be supplied to the Excess-Air recirculation subsystem (4), as a function of at least the energy generated by the organic cycle waste heat recovery subsystem (2). Additionally, the system may further comprise an Excess-Air temperature adjustment subsystem (3) adapted to collect Excess-Air (β) at the outlet of the organic cycle waste heat recovery subsystem (2), and configured to supply Excess-Air (θ) to the inlet of the Excess-Air recirculation subsystem (4).

## Description

### FIELD OF THE INVENTION

The present invention relates to grate coolers. More particularly, the present invention falls within the field of energy recovery systems used in conjunction with grate coolers.

### PRIOR ART

The current state of the art of a clinker production line has long been based on the use of grate coolers. This type of cooler, compared to a satellite rotary cooler, represents a more efficient technology allowing controlling both the secondary air and the final temperature of the clinker, and which allows the existence of a secondary combustion point with introduction of air of preheated combustion. The clinker travels through the cooler by the vibrating movement of the grates, which, being perforated, allow the passage of air that is being introduced into the chambers located on a lower level, thus cooling the clinker with atmospheric air.

Typically, a grate cooler has three gas outlets: secondary air, through which the clinker enters the cooler, tertiary air, in the area closest to the inlet and which is routed to the precalciner, and excess air that is closer to the exit. The clinker outlet reference temperature is 65°C. A grate cooler therefore allows efficient recovery of heat contained in the clinker and pre-heating of the combustion air in the main burner (secondary air) and in the calciner (tertiary air).

However, there is still a considerable part of the heat recovered during the cooling of the clinker - referred to as 'Excess-Air' - which is discarded. This Excess-Air corresponds to about 160 kCal/kg clinker, that is to say about 22% (= 155.5/ 693.8) of the thermal consumption of a clinker production system, which translates into inefficiency in terms of consumption and energy reuse.

In fact, the Excess-Air from the clinker grate cooler, as it is at a relatively low temperature (around 300°C) has had little use by the cement industry, particularly in heat recovery systems coupled to steam turbines - "Waste Heat Recovery System - Steam" (WHRS-S) - conditioned by the temperature necessary for the production of steam in the hypercritical zone (above 400°C). Additionally, the use of Excess-Air for drying fuels is a widespread practice in the cement industry. This use, however, has a limitation associated with the temperature available in the Excess-Air of the clinker grate cooler, which is too high (300°C) for that purpose, in addition to raising the risk of fire.

The present invention intended to innovatively overcome such issues, proposing an innovative solution that allows the efficient energy reuse of Excess-Air produced by a grate cooler.

### SUMMARY OF THE INVENTION

It is therefore an object of the present invention an energy recovery system for a grate cooler. The system of the invention provides an innovative solution by implementing a cascade energy reuse scheme of the Excess-Air produced by a grate cooler. The system integrates a set of subsystems that are connected to each other, in a certain order, in order to allow the heat contained in the Excess-Air to be transferred between each of the subsystems, this exchange occurring in a cascade in order to minimize the thermal gradient between fluids involved, minimizing energy losses and taking advantage of all the enthalpy contained in the Excess-Air.

In case the grate cooler is used for cooling clinker, in the context of a clinker production system, efficient energy reuse can be applied adequately and safely to the task of drying fuels, as well as the recirculation of the Excess-Air into the grate cooler ensures the clinker outlet temperature is within the appropriate range.

### DESCRIPTION OF FIGURES

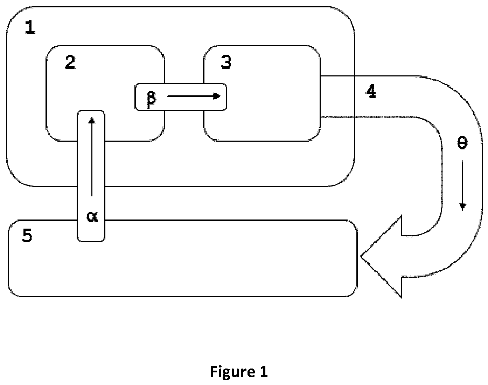

Figure 1 - representation of an embodiment of the energy recovery system proposed wherein the reference signs represent:
1 - energy recovery system;
2 - organic cycle waste heat recovery subsystem;
3 - Excess-Air temperature adjustment subsystem;
4 - Excess-Air recirculation subsystem;
5 - grate cooler;
α - Excess-Air produced by the grate cooler;
β - Excess-Air outputted from the organic cycle waste heat recovery subsystem;
θ - Excess-Air outputted from the Excess-Air recirculation subsystem.

### DETAILED DESCRIPTION

The present invention describes an energy system to be applicable to grate coolers. More particularly the system now developed can be applied in conjunction with grate coolers of any type, regardless of the material that is inside the cooler.

In a main embodiment of the invention, the system is comprised by an organic cycle waste heat recovery subsystem, an Excess-Air recirculation subsystem, and by a control subsystem. Specifically, the organic cycle waste heat recovery subsystem is adapted to collect Excess-Air from a grate cooler, which is at a temperature *t_{α},* and to generate energy from the heat contained in said Excess-Air. In turn, the Excess-Air recirculation subsystem is installed downstream of the organic cycle waste heat recovery subsystem, and is configured to introduce Excess-Air, at a temperature te, into the grate cooler, where *t_{α}>t_{θ}.* The control subsystem in a more generic way can be any processing device, configured to control the temperature inside the grate cooler, *t_{inside},* where *t_{θ}>t_{inside},* by acting on the energy to be supplied to the Excess-Air recirculation subsystem as function of the energy generated by at least the organic cycle waste heat recovery system. The monitoring of said temperatures and energy values is carried out using mechanisms known in the state of the art.

The present system thus consists of the integration of a plurality of subsystems so that the heat contained in the Excess-Air is transferred between subsystems, this exchange occurring in a cascade in order to minimize the thermal gradient between the fluids involved in the exchanges, minimizing the energy losses and taking advantage of all the enthalpy contained in the Excess-Air.

In another embodiment of the invention the organic cycle waste heat recovery subsystem comprises an organic cycle turbine associated with a thermal oil boiler, so the heat contained in the Excess-Air that is produced by the grate cooler is transferred to said thermal oil. The use of an organic cycle waste heat recovery subsystem is essential to effectively use the heat contained in the Excess-Air, which is typically around 300°C, since heat recovery systems coupled to steam turbines are conditioned by temperature required for steam production in the hypercritical zone - above 400°C - where the cost of the steam cycle can be more favourably made possible by the greater efficiency of steam turbines.

In another embodiment of the invention, the Excess-Air recirculation subsystem comprises at least one insufflation fan. Said at least one insufflation fan is responsible for recirculating the Excess-Air, forcing it to re-enter the grate cooler, at temperature te. In another embodiment of the invention, the at least one insufflation fan is installed in a chamber, at a lower level in relation to the clinker cooler grates. The system of the invention allows the recirculation of Excess-Air in the grate cooler itself to be applied with positive energy balance, in subsystems where the energy contained in the Excess-Air is itself recovered. In particular, the additional expenditure of electrical energy at the level of the cooler's insufflation fans due to a higher re-circulated air temperature is compensated by a higher Excess-Air temperature itself.

In another embodiment of the invention, the system further comprises a solar power generation subsystem. Said subsystem can be any subsystem adapted to generate energy from the light and heat of the sun, and can be implemented using solar technologies known in the state of the art. The control subsystem is configured to control the temperature inside the grate cooler, *t_{inside},* acting on the energy to be supplied to the Excess-Air recirculation subsystem, as a function of the total energy generated by the organic cycle waste heat recovery subsystem and by the energy generated by the solar power generation subsystem. In this way, the control subsystem makes it possible to carry out an energy balance between generated energy and energy spent by the different subsystems of the invention.

In another embodiment of the invention, the system further comprises an Excess-Air temperature adjustment subsystem, installed downstream of the organic cycle waste heat recovery subsystem and upstream of the Excess-Air recirculation subsystem. Said subsystem is adapted to collect Excess-Air at the outlet of the organic cycle waste heat recovery subsystem, at a temperature *t*_{β}, where *t_{α}>t_{β}>t_{θ}*, and is configured to dilute said Excess-Air with air at atmospheric temperature, in order to be able to supply Excess-Air to the inlet of the Excess-Air recirculation subsystem, at a temperature te.

In one embodiment of the invention, *t_{α}* has a value of 300°C +- 50°C, *t_{β}* has a value of 120°C +- 10°C and *t_{θ}* has a value of 80°C +- 10°C.

In another embodiment of the invention, the control subsystem is configured to control the temperature *t_{θ}* of the Excess-Air, by programming the operating cycles of the organic cycle waste heat recovery subsystem, the solar energy generation subsystem, the Excess-Air temperature adjustment subsystem and of the Excess-Air recirculation subsystem. In the context of the present application, an operating cycle represents the period of time in which a subsystem is activated or deactivated. Therefore, programming an operating cycle involves defining a schedule of operation for a subsystem, as a function of a duty-cycle and both starting and finishing times of activation. Optionally, the control subsystem is configured to programme the operating cycles of the organic cycle waste heat recovery subsystem, the Excess-Air temperature adjustment subsystem, and for the Excess-Air recirculation subsystem as a function of an electrical energy tariff. In this way, it is possible to adjust the optimal operating point of the system to the daily electrical tariff. As an example, the operation of the Excess-Air temperature adjustment subsystem can be suspended during peak hours, allowing the temperature of the re-circulated air in the grate cooler to be higher, consequently increasing the production of electrical energy in the turbine of the organic cycle waste heat recovery subsystem.

In another embodiment of the invention, the grate cooler is adapted for cooling clinker. In this context, the Excess-Air temperature adjustment subsystem can be a fuel dryer, which is able to dilute the Excess-air with the air at atmospheric temperature and at the same time, using the remaining heat in the Excess-Air for fuel drying. In this way, the dilution of the Excess-Air exiting the organic cycle waste heat recovery subsystem, which is typically between 300°C and 140°C, with air at atmospheric temperature, allows to reduce the temperature of the Excess-Air and thus reaching a drying temperature within a safe operating range, around 100°C, avoiding the volatilization of organic compounds contained in fuels and preventing the risk of fire. In the context of clinker production and cooling, the drying of fuels, in addition to improving their calorific value, becomes particularly advantageous when this subsystem is located downstream of the organic cycle waste heat recovery system, in which case the temperature of the Excess-Air is lower, as part of the heat has already been recovered.

The present invention also relates to a clinker production system comprising at least a main kiln, a precalciner, a grate clinker cooler and the energy recovery system described. Optionally, the system may also comprise a fossil fuel milling system.

The present invention also relates to the method of operating the control subsystem of the energy recovery system for a grate cooler described above. In a first step of the method, monitoring the energy generated by at least the organic cycle waste heat recovery subsystem is carried out, from the heat contained in the Excess-Air coming from a grate cooler at a temperature *t*_{α}. In a second step of the method, the control of the energy supply to the Excess-Air recirculation subsystem is carried out as a function of the energy generated, in order to vary the temperature inside the grate cooler, *t_{inside},* and consequently to vary the temperature *t_{α}* of the Excess-Air coming from the grate cooler.

In another embodiment of the invention, controlling the energy supplied to the Excess-Air recirculation subsystem involves performing the following steps:
- monitoring the Excess-Air temperature *t*_{β} to be introduced into the grate cooler by the Excess-Air recirculation subsystem; and
- controlling the temperature *t*_{β} by programming operating cycles for at least the organic cycle waste heat recovery subsystem, the Excess-Air recirculation subsystem and optionally for the solar energy generation subsystem.

In particular, the control of temperature *t*_{β} is performed by programming an operating cycle for the Excess-Air temperature adjustment subsystem, in which the deactivation of the Excess-Air temperature adjustment subsystem causes an increase in temperature t_{β}, compared to the temperature *t*_{β} obtained during an operating cycle of the Excess-Air temperature adjustment subsystem.

In one embodiment of the invention, if the energy generated by at least the organic cycle waste heat recovery subsystem is less than a threshold value, the energy supplied to the Excess-Air recirculation subsystem is reduced in order to increase the temperature inside the grate cooler, *t_{inside},* and consequently increase the temperature *t*_{α} of the Excess-Air coming from the grate cooler. If the energy generated by at least the organic cycle waste heat recovery subsystem is greater than a threshold value, the energy supplied to the Excess-Air recirculation subsystem is increased in order to reduce the temperature inside the grate cooler, *t_{inside},* and consequently, to reduce the temperature t_{α} of the Excess-Air produced by the grate cooler.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. Energy recovery system for a grate cooler **characterized by** comprising:
— an organic cycle waste heat recovery subsystem, adapted to collect Excess-Air from a grate cooler, at a temperature *t*_{α}, and to generate energy from the heat contained in said Excess-Air;
— an Excess-Air recirculation subsystem, installed downstream of the organic cycle waste heat recovery subsystem, configured to introduce Excess-Air, at a temperature *t*_{θ} into the grate cooler, where *t*_{α}>*t*_{θ}; and
— a control subsystem, configured to control a temperature inside the grate cooler, *t_{inside},* where *t*_{θ}*>t_{inside},* by acting on the energy to be supplied to the Excess-Air recirculation subsystem, as a function of at least the energy generated by the organic cycle waste heat recovery subsystem.

2. The system according to claim 1, wherein the organic cycle waste heat recovery subsystem comprises an organic cycle turbine associated with a thermal oil boiler; the heat contained in the Excess-Air being transferred to the thermal oil.

3. The system according to claims 1 or 2, wherein the Excess-Air recirculation subsystem comprises at least one insufflation fan; and, optionally, the at least one insufflation fan is installed in a chamber, at a lower level than the grate cooler.

4. The system according to any of the previous claims, further comprising a solar power generation subsystem; wherein,
the control subsystem is configured to control the temperature inside the grate cooler, *t_{inside},* by acting on the energy to be supplied to the Excess-Air recirculation subsystem, as a function of the total energy generated by the organic cycle waste heat recovery subsystem and the energy generated by the solar power generation subsystem.

5. The system according to any of the previous claims, further comprising a Excess-Air temperature adjustment subsystem installed downstream of the organic cycle waste heat recovery subsystem and upstream of the Excess-Air recirculation subsystem; said subsystem being adapted to collect Excess-Air at the outlet of the organic cycle waste heat recovery subsystem, at a temperature *t*_{β}, where *t*_{α}>*t*_{β}>*t*_{θ}, and being configured to dilute said Excess-Air with air at atmospheric temperature in order to supply Excess-Air to the inlet of the Excess-Air recirculation subsystem, at a temperature te.

6. The system according to claim 5, wherein
— *t*_{α} has a value of 300°C +- 50°C;
— *t*_{β} has a value of 120°C +- 10°C; and
— *t*_{θ} has a value of 80°C +- 10°C.

7. The system according to claims 5 or 6, wherein the control subsystem is configured to control the Excess-Air temperature te, by programming operating cycles of the organic cycle heat recovery subsystem, the solar energy generation subsystem, the Excess-Air temperature adjustment subsystem and of the Excess-Air recirculation subsystem; and optionally,
the control subsystem being configured to programme operating cycles of the organic cycle heat recovery subsystem, the Excess-Air temperature adjustment subsystem, and of the Excess-Air recirculation subsystem as a function of an electrical energy tariff.

8. The system according to any of the previous claims, wherein the grate cooler is adapted to cool clinker.

9. The system according to claims 5 and 8, wherein the Excess-Air temperature adjustment subsystem is a fuel dryer.

10. A clinker production system comprising:
— a main kiln;
— a precalciner;
— a grate clinker cooler; and
— the energy recovery system of the claims 1 to 9;
and, optionally, the system further comprising a fossil fuel milling system.

11. Method of operating the control subsystem of the energy recovery system for a grate cooler of claims 1 to 9; said method comprising the following steps:
i. monitoring the energy generated by at least an organic cycle waste heat recovery subsystem from the heat contained in the Excess-Air produced by a grate cooler at a temperature *t*_{α};
ii. controlling the energy to be supplied to an Excess-Air recirculation subsystem as a function of the energy generated by at least the organic cycle waste heat recovery subsystem, in order to vary the temperature inside the grate cooler, *t_{inside},* and consequently to vary the temperature *t*_{α} of the Excess-Air produced by the grate cooler.

12. The method according to claim 11, wherein controlling the energy to be supplied to the Excess-Air recirculation subsystem involves performing the following steps:
— monitoring the Excess-Air temperature *t*_{β} to be introduced into the grate cooler by the Excess-Air recirculation subsystem; and
— controlling the temperature *t*_{β} by programming operating cycles for at least the organic cycle waste heat recovery subsystem, the Excess-Air recirculation subsystem and optionally for the solar power generation subsystem.

13. The method according to claim 12, wherein the control of the temperature *t*_{β} is performed by programming operating cycles for the Excess-Air temperature adjustment subsystem, wherein:
a deactivation of the Excess-Air temperature adjustment subsystem causes an increase in temperature *t*_{β}, compared to the temperature *t*_{β} obtained during an operating cycle of the Excess-Air temperature adjustment subsystem.

14. The method according to any of the previous claims 11 to 13, wherein,
if the energy generated by at least the organic cycle waste heat recovery subsystem is less than a threshold value, the energy to be supplied to the Excess-Air recirculation subsystem is reduced in order to increase the temperature inside the grate cooler, *t_{inside},* and consequently to increase the temperature *t*_{α} of the Excess-Air produced by the grate cooler; and
if the energy generated by at least the organic cycle waste heat recovery subsystem is greater than a threshold value, the energy to be supplied to the Excess-Air recirculation subsystem is increased in order to reduce the temperature inside the grate cooler, *t_{inside},* and consequently, to reduce the temperature *t_{α}* of the Excess-Air produced by the grate cooler.
